# EUROPEAN PATENT APPLICATION

(11) **EP 4 434 955 A1**
(43) Date of publication of application: **25.09.2024**
(21) Application number: 24163913.7
(22) Date of filing: 15.03.2024
(51) Int. Cl.: C04B 41/00, C04B 41/52, C04B 41/89, F01D 5/28, C04B 111/00

(54) **ENVIRONMENTAL BARRIER COATING WITH THERMAL RESISTANCE**

(30) Priority: 20.03.2023 US 202318123666
(71) Applicant: RTX Corporation, Farmington, CT 06032 (US)
(72) Inventor: JACKSON, III, Richard Wesley, Mystic, 06355 (US); TANG, Xia, West Hartford, 06107 (US); BEALS, James T., West Hartford, 06107 (US); ROHBECK, Nadia, Milford, 06460 (US); LITTON, David A., West Hartford, 06107 (US); SUDRE, Olivier H., Glastonbury, 06073 (US)
(74) Representative: Dehns

(57) **Abstract**

An article (100) according to an exemplary embodiment of this disclosure includes a substrate (104) and a bond coat (102) disposed on the substrate (104). The bond coat (102) includes a matrix (106). The matrix (106) includes regions of β-cristobalite (200). The article (100) also includes a plurality of gettering particles (108) disposed in the matrix (106), a plurality of diffusive particles (110) disposed in the matrix (106), and an additive operable to stabilize the regions of β-cristobalite (200) at ambient temperatures dispersed in the matrix (106). An article (100) and a method of coating an article (100) are also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines, and methods of coating such articles. Components, such as gas turbine engine components, may be subjected to high temperatures, corrosive and oxidative conditions, and elevated stress levels. In order to improve the thermal and/or oxidative stability, the component may include a protective barrier coating.

### SUMMARY

From one aspect, there is provided an article that, among other possible things, includes a substrate and a bond coat disposed on the substrate. The bond coat includes a matrix. The matrix includes regions of β-cristobalite. The article also includes a plurality of gettering particles disposed in the matrix, a plurality of diffusive particles disposed in the matrix, and an additive operable to stabilize the regions of β-cristobalite at ambient temperatures dispersed in the matrix.

In a further example of the foregoing, the additive includes Al cations.

In a further example of any of the foregoing, the additive includes at least one of alumina and aluminum phosphate.

In a further example of any of the foregoing, the additive includes at least one of Na, Ca, Li, and K cations.

In a further example of any of the foregoing, the additive includes Na, Ca, Li, or K oxide.

In a further example of any of the foregoing, the additive includes aluminum phosphate, boron phosphate, and a silicate glass.

In a further example of any of the foregoing, the article also includes a top coat disposed on the bond coat.

There is also provided an article that, among other possible things, includes a substrate and a bond coat disposed on the substrate. The bond coat includes a silica-based matrix. The article also includes a plurality of gettering particles disposed in the matrix, a plurality of diffusive particles disposed in the matrix, and an additive operable to stabilize β-cristobalite at ambient temperatures dispersed in the matrix.

In a further example of the foregoing, the additive includes Al cations.

In a further example of any of the foregoing, the additive includes at least one of alumina and aluminum phosphate.

In a further example of any of the foregoing, the additive includes at least one of Na, Ca, Li, and K cations.

In a further example of any of the foregoing, the additive includes Na, Ca, Li, or K oxide.

In a further example of any of the foregoing, the additive includes aluminum phosphate, boron phosphate, and a silicate glass.

In a further example of any of the foregoing, the silica-based matrix up to about 20 vol. % additive.

There is also provided a method of coating an article that, among other possible things, includes applying a bond coat to an article. The bond coat includes a silica-based matrix. The method also includes a plurality of gettering particles disposed in the matrix, a plurality of diffusive particles disposed in the matrix, and an additive operable to stabilize β-cristobalite at ambient temperatures dispersed in the matrix.

In a further example of the foregoing, at least portions of the silica-based matrix transform to regions of β-cristobalite when the article is heated.

In a further example of any of the foregoing, the applying is by slurry coating.

In a further example of any of the foregoing, the slurry coating includes heat treating the article. The heat treating is at a temperature higher than a temperature at which β-cristobalite forms.

In a further example of any of the foregoing, the additive includes Al cations.

In a further example of any of the foregoing, the additive includes at least one of Na, Ca, Li, and K cations.

### BRIEF DESCRIPTION OF THE DRAWINGS

Figure 1 is a schematic view of an example gas turbine engine.
Figure 2 illustrates an example article with a barrier layer.

### DETAILED DESCRIPTION

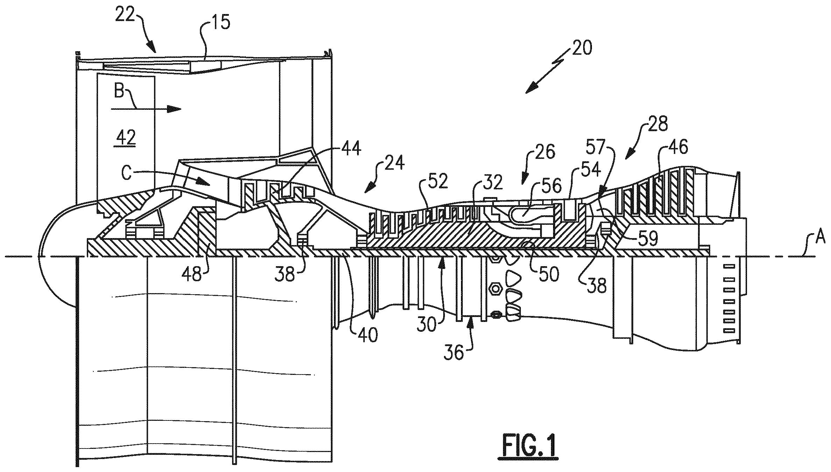

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures as well as turboprops.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

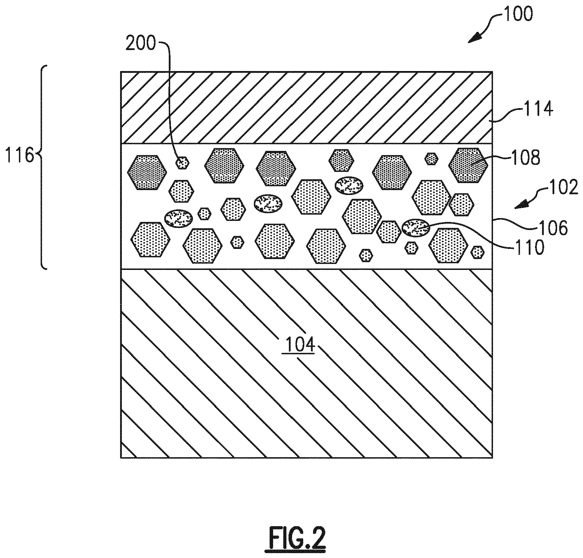

Figure 2 schematically illustrates a representative portion of an example article 100 for the gas turbine engine 20 that includes a composite material bond coat 102 that acts as a barrier layer. The article 100 can be, for example, an airfoil in the compressor section 24 or turbine section 28, a combustor liner panel in the combustor section 26, a blade outer air seal, or other component that would benefit from the examples herein. In this example, the bond coat 102 is used as an environmental barrier layer to protect an underlying substrate 104 from environmental conditions, as well as thermal conditions. As will be appreciated, the bond coat 102 can be used as a stand-alone barrier layer, as an outermost/top coat with additional underlying layers, or in combination with other coating under- or over-layers, such as, but not limited to, ceramic-based topcoats.

The bond coat 102 includes a matrix 106, a dispersion of "gettering" particles 108, and a dispersion of diffusive particles 110. The matrix 106 may be silicon dioxide (SiO₂), in one example. In one example, the gettering particles 108 are silicon oxycarbide particles (SiOC) or silicide particles such as molybdenum disilicide (MoSi₂) particles 108, though other examples are contemplated. The gettering particles 108 could be, for instance, molybdenum disilicide particles, tungsten disilicide particles, vanadium disilicide particles, niobium disilicide particles, silicon oxycarbide particles, silicon carbide (SiC) particles, silicon nitride (Si₃N₄) particles, silicon oxycarbonitride (SiOCN) particles, silicon aluminum oxynitride (SiAlON) particles, silicon boron oxycarbonitride (SiBOCN) particles, or combinations thereof. The diffusive particles 110 could be, for instance, barium magnesium alumino-silicate (BMAS) particles, barium strontium aluminum silicate particles, magnesium silicate particles, calcium aluminosilicate particles (CAS), alkaline earth aluminum silicate particles, yttrium aluminum silicate particles, ytterbium aluminum silicate particles, other rare earth metal aluminum silicate particles, or combinations thereof.

The bond coat 102 protects the underlying substrate 104 from oxygen and moisture. For example, the substrate 104 can be a ceramic-based substrate, such as a silicon-containing ceramic material. One example is silicon carbide. Another non-limiting example is silicon nitride. Ceramic matrix composite (CMC) substrates 104 such as silicon carbide fibers in a silicon carbide matrix are also contemplated. These CMC substrates can be formed by melt infiltration, chemical vapor infiltration (CVI), polymer infiltration and pyrolysis (PIP), particulate infiltration, or any other known method.

The gettering particles 108 and the diffusive particles 110 function as an oxygen and moisture diffusion barrier to limit the exposure of the underlying substrate 104 to oxygen and/or moisture from the surrounding environment. Without being bound by any particular theory, the diffusive particles 110, such as BMAS particles 110, enhance oxidation and moisture protection by diffusing to the outer surface of the barrier layer opposite of the substrate 104 and forming a sealing layer that seals the underlying substrate 104 from oxygen/moisture exposure. Additionally, cationic metal species of the diffusive particles 110 (for instance, for BMAS particles, barium, magnesium, and aluminum) can diffuse into the gettering particles 108 to enhance oxidation stability of the gettering material. Further, the diffusion behavior of the diffusive particles 110 may operate to seal any microcracks that could form in the barrier layer. Sealing the micro-cracks could prevent oxygen from infiltrating the barrier layer, which further enhances the oxidation resistance of the barrier layer. The gettering particles 108 can react with oxidant species, such as oxygen or water that could diffuse into the bond coat 102. In this way, the gettering particles 108 could reduce the likelihood of those oxidant species reaching and oxidizing the substrate 104.

A ceramic-based top coat 114 may be interfaced directly with an outer surface of the bond coat 102. The top coat 114 and bond coat 102 together form a barrier coating 116 for the substrate 104. The top coat 114, when used, is the outermost layer of the barrier coating 116, and is exposed to the elements when the article 100 is in use. The top coat 114 includes an oxide-based material. The oxide-based material can be, for instance, hafnium-based oxides or yttrium-based oxides (such as hafnia, hafnium silicate, yttrium silicates, ytterbium silicates, other rare-each silicates, yttria stabilized zirconia or gadolinia stabilized zirconia), calcium aluminosilicates, mullite, barium strontium aluminosilicate, or combinations thereof, but is not limited to such oxides.

In some examples, the article 100 is exposed to high temperatures, such as during the operation of engine 20. High temperature exposure and/or subsequent cooling to ambient temperatures, such as when the engine 20 is shut off, may induce phase changes of materials in the barrier layer 116. Some such phase changes are associated with volumetric contraction of the material, which can generate tensile stresses within the material and drive microcrack formation. Microcracks can interfere with the effectiveness of the barrier layer 116 in protecting the substrate 104, the longevity of the barrier layer 116, or both.

It would be particularly advantageous to minimize volumetric changes that take place in the matrix 106. In a particular example where the matrix 106 is or contains SiO₂, SiO₂ tends to transform to β-cristobalite during high temperature exposure, e.g. temperatures of above about 1000 degrees C, which subsequently transforms to α-cristobalite when the temperature returns to ambient or near-ambient temperatures. This second transformation from β-cristobalite to α-cristobalite is accompanied by a volumetric contraction, which as described above can drive formation of microcracks within the bond coat 102.

Accordingly, in order to inhibit microcrack formation, the bond coat 102 is provided with an additive that stablizes β-cristobalite at temperatures lower than the operating temperatures of the engine 20, and through ambient or near-ambient temperatures. In other words, the additive inhibits phase transformations that are accompanied by volumetric contraction such as the transformation of β-cristobalite into α-cristobalite upon temperature reduction. Therefore, the matrix 106 includes regions 200 of β-cristobalite at least after the article 100 is exposed to high temperatures, which may be during operating of the engine 20 or during manufacture of the article/application of the bond coat 102 as discussed below. The additive/regions 200 of β-cristobalite thereby protect the bond coat 102 from microcrack formation during heating/cooling of the article 100, enhancing its performance/durability and longevity.

Moreover, over time a layer of primarily silica can form at the interface of the bond coat 102 with the substrate 104, which can lead to spallation. However β-cristobalite is less likely to cause spallation. Thus once the β-cristobalite regions 200 form and are stabilized by the additive as discussed above, the likelihood of spallation is reduced.

Likewise a layer of silica may form around the gettering particles 108. The presence of regions 200 of β-cristobalite may inhibit the formation of such a layer, contributing to the overall stability of the bond coat 102 and effectiveness of the gettering particles 108.

The additive can be any additive the presence of which stabilizes β-cristobalite at ambient temperatures. Without being bound by any particular theory, in one example, β-cristobalite is stabilized by the presence of cations such as Na⁺, K⁺, Li⁺, Ca²⁺, or Al³⁺ or combinations thereof. In one example, the additive is selected not to dissolve into the gettering particles 108 or the diffusive particles 110 based on the known reaction kinetics of the selected materials for the bond coat 102. That is, in this example, the additive remains dispersed in the matrix 106.

In one example, the additive includes Aluminum cations. In a particular example, the additive includes a combination of at least one of alumina and aluminum phosphate and another cation, such as from a metal oxide. One particular example the additive is Al₂O₃ and Na₂O. Another example the additive is Al₂O₃ and K₂O. Another example the additive is Al₂O₃ and CaO. Another example the additive is Al₂O₃ and Li₂O. In another example the additive includes aluminum phosphate, boron phosphate, and a silicate glass.

The bond coat 102 can be applied to the substrate 104 by any suitable method. One example is a slurry coating method in which constituents of the bond coat 102 including matrix 106 material, gettering particles 108, diffusive particles 110, and additive 200 are combined with a carrier fluid to form a slurry which is applied to the substrate 104. The slurry may then be dried/cured by any suitable method and according to parameters suitable for the particular selected constituents and the substrate 104. In one example, the heat treatment may be at temperatures that promote β-cristobalite formation within the bond coat 102.

In one example, the bond coat 102 includes at least about 50 vol. % gettering particles 108 such as SiC, between about 1 vol. % and about 10 vol. % diffusive particles 110 such as BMAS, and between about 10 vol. % and about 50 vol. % matrix 106. Prior to any β-cristobalite formation the silica-based matrix 106 may be up to about 20 vol. % additive. When the bond coat 102 is heated either during operation of the engine 20 or during heat treatment, some of the silica transforms into the regions 200 of β-cristobalite. In a more particular example, the silica-based matrix 106 includes about 80 vol. % silica and about 20% cation-containing additive prior to any β-cristobalite formation. The cation-containing additive in this example may be a combination of about 10 vol. % Al-cation-containing material such as alumina or aluminum phosphate and about 10 vol. % Na-cation-containing material such as Na₂O. In another more particular example, the silica-based matrix 106 includes about 89 vol. % silica prior to any β-cristobalite formation and about 11% cation-containing additive. The cation-containing additive in this example may be a combination of about 9 vol. % Al-cation-containing material such as alumina or aluminum phosphate and about 2 vol. % Ca-cation-containing material such as CaO.

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. An article (100), comprising:
a substrate (104); and
a bond coat (102) disposed on the substrate (104), the bond coat (102) including:
a matrix (106), the matrix (106) including regions of β-cristobalite (200);
a plurality of gettering particles (108) disposed in the matrix (106);
a plurality of diffusive particles (110) disposed in the matrix (106); and
an additive operable to stabilize the regions of β-cristobalite (200) at ambient temperatures dispersed in the matrix (106).

2. The article of claim 1, further comprising a top coat (114) disposed on the bond coat (102).

3. An article (100), comprising:
a substrate (104); and
a bond coat (102) disposed on the substrate (104), the bond coat (102) including:
a silica-based matrix (106);
a plurality of gettering particles (108) disposed in the matrix (106);
a plurality of diffusive particles (110) disposed in the matrix (106); and
an additive operable to stabilize β-cristobalite (200) at ambient temperatures dispersed in the matrix (106).

4. The article of claim 3, wherein the silica-based matrix (106) up to about 20 vol. % additive.

5. The article of any preceding claim, wherein the additive includes Al cations.

6. The article of claim 5, wherein the additive includes at least one of alumina and aluminum phosphate.

7. The article of any preceding claim, wherein the additive includes at least one of Na, Ca, Li, and K cations.

8. The article of claim 7, wherein the additive includes Na, Ca, Li, or K oxide.

9. The article of any preceding claim, wherein the additive includes aluminum phosphate, boron phosphate, and a silicate glass.

10. A method of coating an article (100), comprising:
applying a bond coat (102) to an article (100), the bond coat (102) including:
a silica-based matrix (106);
a plurality of gettering particles (108) disposed in the matrix (106);
a plurality of diffusive particles (110) disposed in the matrix (106); and
an additive operable to stabilize β-cristobalite (200) at ambient temperatures dispersed in the matrix (106).

11. The method of claim 10, wherein at least portions of the silica-based matrix (106) transform to regions of β-cristobalite (200) when the article (100) is heated.

12. The method of claim 10 or 11, wherein the applying is by slurry coating.

13. The method of claim 12, wherein the slurry coating includes heat treating the article (100), and wherein the heat treating is at a temperature higher than a temperature at which β-cristobalite (200) forms.

14. The method of any of claims 10 to 13, wherein the additive includes Al cations.

15. The method of any of claims 10 to 14, wherein the additive includes at least one of Na, Ca, Li, and K cations.
